# EUROPÄISCHE PATENTANMELDUNG

(11) **EP 1 277 772 A2**
(43) Veröffentlichungstag der Anmeldung: **22.01.2003**
(21) Anmeldenummer: 02014140.4
(22) Anmeldetag: 25.06.2002
(51) Int. Cl.: C08G 18/08, C09D 175/06

(54) **Wässrige Dispersionen für hydrolysefeste Beschichtungen**

(30) Priorität: 16.07.2001 DE 10133789
(71) Anmelder: BASF AKTIENGESELLSCHAFT, 67056 Ludwigshafen (DE)
(72) Erfinder: Häberle, Karl, Dr., 67346 Speyer (DE); Brauch, Gundo, Dr., 67454 Hassloch (DE); Hörner, Klaus Dieter, Dr., 68165 Mannheim (DE); Reichert, Jürgen, Dr., 67117 Limburgerhof (DE); Seyffer, Hermann, Dr., 69123 Heidelberg (DE)

(57) **Zusammenfassung**

Wässrige Dispersionen für hydrolysefeste Beschichtungen, enthaltend ein Polyurethan, aufgebaut aus
a₎ Diisocyanaten,
b₎ Diolen, von denen
b₁₎ 10 bis 100 mol-%, bezogen auf die Gesamtmenge der Diole (b), ein Molekulargewicht von 500 bis 5000 aufweisen, und
b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
erhältlich durch Umsetzung der Monomere a₎, b₎, c₎ sowie gegebenenfalls d₎, und e₎ in Abwesenheit von metallorganischen Katalysatoren bei Temperaturen von 100 bis 180°C und mittleren Reaktionszeiten von 1 bis 20 Stunden.

## Beschreibung

Die vorliegende Erfindung betrifft wässrige Dispersionen für hydrolysefeste Beschichtungen, enthaltend ein Polyurethan, aufgebaut aus
a₎ Diisocyanaten,
b₎ Diolen, von denen
   b₁₎ 10 bis 100 mol-%, bezogen auf die Gesamtmenge der Diole (b), ein Molekulargewicht von 500 bis 5000 aufweisen, und
   b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
erhältlich durch Umsetzung der Monomere a₎, b₎, c₎ sowie gegebenenfalls d₎, und e₎ in Abwesenheit von metallorganischen Katalysatoren bei Temperaturen von 100 bis 180°C und mittleren Reaktionszeiten von 1 bis 20 Stunden.

Weiterhin betrifft die Erfindung Verfahren zur Beschichtung, Verklebung und Imprägnierung von Gegenständen aus unterschiedlichen Materialien mit diesen Dispersionen, die mit diesen Dispersionen beschichteten, verklebten und imprägnierten Gegenstände, sowie die Verwendung der erfindungsgemäßen Dispersionen als hydrolysefeste Beschichtungsmaterialien.

Die Verwendung von wässerigen Dispersionen, die Polyurethane enthalten (kurz: PUR-Dispersionen) zur Beschichtung von Substraten wie Textil oder Leder ist seit langem bekannt. Aufgrund ihrer hervorragenden mechanischen Eigenschaften werden hierzu bevorzugt PUR-Dispersionen auf Basis von Polyesterolen eingesetzt.

Häufig werden die auf diese Weise beschichteten Substrate dem Einfluß einer feucht-warmen Atmosphäre ausgesetzt. Dabei stellt man fest, daß die Beschichtungen infolge hydrolytischen Abbaus ihre mechanische Stabilität verlieren.

Aus der US-A 4 113 676 ist bekannt, daß wässerige PUR-Dispersionen durch den Zusatz von Monocarbodiimiden, die keine weiteren funktionellen Gruppen tragen, gegen hydrolytischen Abbau geschützt werden können. Nachteilig an diesen Systemen ist jedoch die Anwesenheit der niedermolekularen Carbodiimide (CDI), die beispielsweise aus der Beschichtung migrieren und somit zu hygienischen Problemen führen können. Weiterhin ist nachteilig, daß die durch Reaktion des CDI mit Carboxylgruppen gebildeten Acylharnstoffe in Amid und das dem Carbodiimid zugrundeliegende Isocyanat spalten (Williams & Ibrahim; Chem. Rev. 81, 603 (1981), das ebenfalls migrieren und zu Problemen führen kann.

Die WO 96/08 524, EP-A 207 414 und DE-A 4 039 193 beschreiben wässerige Dispersionen von Acylharnstoff-haltigen Polyisocyanat-Additionsprodukten. Zu deren Herstellung werden zunächst Carbodiimid-haltige Polyurethane oder Präpolymere hergestellt und die Carbodiimidgruppen vor der Dispergierung der Polyurethane mit Carbonsäuren wie Stearinsäure zu den Acylharnstoffgruppen umgesetzt.

In der EP-B 595 149 wird die Verwendung wässriger PUR-Dispersionen zur Erzeugung porenfreier, wasserdampfdurchlässiger Beschichtungen beschrieben. Die Herstellung der eingesetzten PUR-Dispersionen erfolgt dabei durch Umsetzung der entsprechenden Monomere bei Temperaturen von weniger als 100°C.

Gegenstand der EP-A 1 002 001 sind PUR-Dispersionen, welche sich als sehr hydrolysefeste Beschichtungen für Materialien aus Metall, Kunststoff, Papier, Textil, Leder oder Holz eignen. Die hierbei verwendeten PUR-Dispersionen müssen jedoch Carbodiimide enthalten, welche zuvor aufwendig hergestellt werden müssen und überdies recht teuer sind.

Der vorliegenden Erfindung lag daher die Aufgabe zugrunde, den geschilderten Nachteilen abzuhelfen und verbesserte PUR-Dispersionen zu entwickeln, die auch ohne Mitverwendung von teurem Carbodiimiden ein hohes Niveau an Hydrolysefestigkeit aufweisen.

Demgemäß wurden die eingangsdefinierten wäßrigen Dispersionen sowie ein Verfahren zu deren Herstellung gefunden. Weiterhin wurde ein Verfahren zur Herstellung von Beschichtungen, Verklebungen und Imprägnierungen entwickelt. Weiterhin erstreckt sich die vorliegende Erfindung auch auf die so beschichteten, verklebten und imprägnierten Gegenstände und deren Verwendung als hydrolysefeste Beschichtung.

Die erfindungsgemäßen wässrigen Dispersionen für hydrolysefeste Beschichtungen enthalten Polyurethane, welche neben anderen Monomeren aus Diisocyanaten a) abgeleitet sind, wobei vorzugsweise solche Diisocyanate a) verwendet werden, die üblicherweise in der Polyurethanchemie eingesetzt werden.

Insbesondere zu nennen sind als Monomere (a) Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/- cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α,-ω-Dihydroxypolybutadien, α,-ω-Dihydroxypolymethacrylester oder α,-ω-Dihydroxypolyacrylester als Monomere (b1). Solche Verbindungen sind beispielsweise aus der EP-A 0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, sind die Polyurethane neben den Komponenten (a), (b) und gegebenenfalls (d) aus von den Komponenten (a), (b) und (d) verschiedenen Monomeren (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3 905 929 und US-A 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c₁) 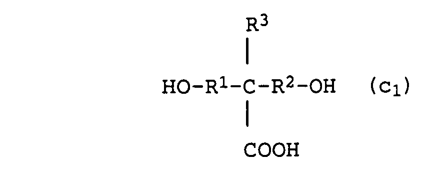 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 2034479 genannten Addukte von aliphatischen diprimären Diaminen an α,β-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nichtphenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, wobei insbesondere der Anteil an HMDI mindestens 33 mol% beträgt, cycloaliphatische Diisocyanate oder TMXDI und als Monomer (b1) im wesentlichen nur ein Polyesterdiol, aufgebaut aus den genannten aliphatischen Diolen und Disäuren, eingesetzt werden.

Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA/IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die in der erfindungsgemäßen Dispersion enthaltenen Polyurethane enthalten bevorzugt keine wirksamen Mengen an Acylharnstoffgruppen.

Die Polyaddition der Komponenten (a) bis (e) zur Herstellung des im den erfindungsgemäßen wässrigen Dispersionen vorliegenden Polyurethans erfolgt bei Reaktionstemperaturen von 100 bis 180°C, bevorzugt 100 bis 150°C unter Normaldruck oder unter autogenem Druck.

Die erforderlichen Reaktionszeiten liegen im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Die Polyaddition der Monomere a₎ bis e₎ zur Herstellung der PUR-Dispersion erfolgt dabei in Abwesenheit von metallorganischen Katalysatoren. Unter der Bezeichnung metallorganische Katalysatoren sollen dabei verstanden werden Verbindungen von Elementen aus folgenden Gruppen des Periodensystems: Ia (mit Ausnahme von Wasserstoff), IIa, IIIa mit Ausnahme von Bor, IVa mit Ausnahme von Kohlenstoff, Va mit Ausnahme von Stickstoff und Phosphor, VIa mit Ausnahme von Sauerstoff und Schwefel, IIIb, IVb, Vb, VIb, VIIb, VIIIb, Ib, IIb sowie die Lanthaniden und Actiniden, die eine kovalente Bindung Element-Kohlenstoff aufweisen. Dazu zählen u.a. auch die häufig verwendeten organischen Zinnverbindungen, wie zum Beispiel Dibutylzinndilaurat.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:

Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A 3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Die Polyurethan-Dispersionen können handelsübliche Hilfs- und Zusatzstoffe wie Treibmittel, Entschäumer, Emulgatoren, Verdikkungsmittel und Thixotropiermittel, Farbmittel wie Farbstoffe und Pigmente enthalten.

Die erfindungsgemäßen Dispersionen eignen sich zur Beschichtung von Gegenständen aus Metall, Kunststoff, Papier, Textil, Leder oder Holz, indem man sie nach den allgemein üblichen Verfahren, also z.B. durch Sprühen oder Rakeln in Form eines Films auf diese Gegenstände aufträgt und die Dispersion trocknet.

Insbesondere sind die Dispersionen zur Beschichtung von Gegenständen aus Kunststoff, Papier, Textil oder Leder geeignet, wenn man zuvor die Dispersion nach bekannten Verfahren zu einem Schaum aufschlägt und mit diesem beschichtet.

Die wässrigen Dispersionen eignen sich vor allem für die Herstellung von Zubereitungen, wie sie in der DE-A 19 605 311 beschrieben sind. Diese Zubereitungen werden nach der Lehre der DE-A 19 605 311 für die Beschichtung von Textilien oder Vliesen eingesetzt. Diese Materialien werden durch diese Behandlung flammfest, wasserdicht gegenüber flüssigem Wasser und wasserdampfdurchlässig.

Zur Herstellung der beschichteten Textilien oder Vliese werden die erfindungsgemäßen wässerigen Dispersionen nach üblichen Verfahren auf die textilen Trägermaterialien aufgetragen, z.B. durch rakeln oder streichen und das beschichtete Trägermaterial anschließend getrocknet.

Bevorzugt wird dabei auf folgende Weise vorgegangen:

Die wässerige Dispersion wird in Schaumform auf das Trägermaterial aufgetragen, da dadurch die Dampfdurchlässigkeit erheblich verbessert wird. Hierzu wird die Dispersion nach Zusatz des Schaumstabilisators und gegebenenfalls von Verdickungsmittel und weiterer Zusatzstoffe wie Flammschutzmitteln mechanisch aufgeschäumt. Dies kann in einem Schaummixgerät unter Eintrag hoher Scherkräfte erfolgen. Eine weitere Möglichkeit besteht darin, in einem Schaumgenerator durch Einblasen von Druckluft aufzuschäumen. Vorzugsweise wird mittels eines Schaumgenerators aufgeschäumt.

Das geschäumte Beschichtungsmittel wird dann mit üblichen Beschichtungseinrichtungen, beispielsweise einem Streichrakel oder anderen Schaumauftragungsgeräten, auf das Trägermaterial aufgetragen. Die Auftragung kann ein- oder beidseitig erfolgen; vorzugsweise erfolgt sie einseitig. Die Auftragungsmenge pro Seite beträgt von 20 bis 150 g/m², insbesondere 50 bis 90 g/m².

Bei Mengen unterhalb 20 g/m² erhält man zwar guten Dampfdurchlaß bei niedrigen Kosten, aber schlechte Wasserdichtigkeit. Bei Mengen oberhalb 150 g/m² treten beim Trocknen Rißbildungen auf.

Gegenstände aus Metall, Kunststoff, Papier, Leder oder Holz lassen sich ebenfalls mit anderen Gegenständen, vorzugsweise den vorgenannten Gegenständen, verkleben, indem man die erfindungsgemäße wässerige Dispersion in Form eines Films auf einem dieser Gegenstände aufträgt und ihn vor oder nach dem Trocknen des Films mit einem anderen Gegenstand zusammenfügt.

Gegenstände aus Textil, Leder oder Papier lassen sich mit den erfindungsgemäßen Dispersionen imprägnieren, indem man diese Gegenstände mit der wässerigen Dispersion tränkt und anschließend trocknet.

Die erfindungsgemäßen wässrigen Dispersionen zeichnen sich u.a. durch eine hohe Hydrolysefestigkeit aus und sind sehr leicht und wirtschaftliche herstellbar, da bei der Herstellung auf die Mitverwendung von teuren Carbodiimiden verzichtet werden kann. Die erfindungsgemäßen Dispersionen eignen sich insbesondere zur Beschichtung von Textilien oder Leder.

### Experimenteller Teil:

### Beispiel

400,0 g (0,20 mol) eines Polyesterdiols aus Adipinsäure, Neopentylglykol und Hexandiol-1,6 der OH-Zahl 56, 30,0 g (0,0084 mol) eines Butanol-gestarteten Polyethylenoxids der OH-Zahl 15 und 30 g Aceton wurden in einem Rührkolben vorgelegt und auf 70°C gebracht. Dazu wurden 129,0 g (0,4917 mol) HMDI und 110,0 g (0,4948 mol) IPDI gegeben und 60 min bei 110°C gerührt. Dann wurden 54,0 g (0,60 mol) Butandiol-1,4 zugegeben und weitere 180 min bei 110°C gerührt. Hernach wurde mit 710 g Aceton verdünnt, auf 50°C gekühlt und der NCO-Gehalt zu 1,03 Gew.-% bestimmt (berechnet: 1,02 Gew.-%). 10 min nach der Zugabe von 25,3 g einer 50%igen wäßrigen Lösung des Natriumsalzes der 2-Aminoethyl-2-aminoethansulfonsäure wurde mit 870 g Wasser dispergiert und dann mit 6,5 g DETA und 2,4 g IPDA in 100 g Wasser kettenverlängert. Nach Destillation des Acetons enthielt man eine feinteilige Dispersion mit ca. 40 % Festgehalt.

### Vergleichsbeispiel

400,0 g (0,20 mol) eines Polyesterdiols aus Adipinsäure, Neopentylglykol und Hexandiol-1,6 der OH-Zahl 56, 30,0 g (0,0084 mol) eines Butanol-gestarteten Polyethylenoxids der OH-Zahl 15, 0,15 g DBTL und 30 g Aceton wurden in einem Rührkolben vorgelegt und auf 70°C gebracht. Dazu wurden 129,0 g (0,4917 mol) HMDI und 110,0 g (0,4948 mol) IPDI gegeben und 60 min bei 70°C gerührt. Dann wurden 54,0 g (0,60 mol) Butandiol-1,4 zugegeben und weitere 120 min bei 70°C gerührt. Hernach wurde mit 710 g Aceton verdünnt, auf 50°C gekühlt und der NCO-Gehalt zu 1,02 Gew.-% bestimmt (berechnet: 1,02 Gew.-%). 10 min nach der Zugabe von 25,3 g einer 50%igen wäßrigen Lösung des Natriumsalzes der 2-Aminoethyl-2-aminoethansulfonsäure wurde mit 870 g Wasser dispergiert und dann mit 6,5 g DETA und 2,4 g IPDA in 100 g Wasser kettenverlängert. Nach der Destillation des Acetons erhielt man eine feinteilige Dispersion mit ca. 40 % Festgehalt.

### Abkürzungen:

- DBTL: Dibutylzinndilaurat
- HMDI: Di(isocyanatocyclohexyl)methan
- IPDI: Isophorondiisocyanat(1-Isocyanato-3,5,5-trimethyl-5-isocyanatomethylcyclohexan)
- DETA: Diethylentriamin
- IPDA: Isophorondiiamin

Zur Prüfung wurden aus den Dispersionen Filme mit ca. 0,6 mm Dicke (trocken) gegossen und drei Tage bei 23°C trocknen gelassen. Unmittelbar nach ihrer Herstellung sowie nach einer siebentägigen Lagerung bei 70°C und 90 % relativer Feuchte wurde ihre Zugfestigkeit nach DIN 53 504 gemessen.

Die Prüfergebnisse sind der Tabelle 1 zu entnehmen.

| | Zugfestigkeit [N/mm²] | | Änderung [%] |
|---|---|---|---|
| | sofort | 7d, 70°C, 90%rF | |
| | | | |
| Beispiel | 29,1 | 22,4 | -23 |
| Vergleichsbeispiel | 32,3 | 19,7 | -39 |

Aus der Tabelle 1 geht hervor, daß sich die erfindungsgemäßen wässrigen Dispersionen u.a. durch eine hohe Hydrolysebeständigkeit auszeichnen, welche auch noch nach 7 Tagen, bei 70°C und 90 % relativer Luftfeuchtigkeit (rF) anhält.

## Patentansprüche

1. Wässrige Dispersionen für hydrolysefeste Beschichtungen, enthaltend ein Polyurethan, aufgebaut aus
a₎ Diisocyanaten,
b₎ Diolen, von denen
b₁₎ 10 bis 100 mol-%, bezogen auf die Gesamtmenge der Diole (b), ein Molekulargewicht von 500 bis 5000 aufweisen, und
b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
erhältlich durch Umsetzung der Monomere a₎, b₎, c₎ sowie gegebenenfalls d), und e) in Abwesenheit von metallorganischen Katalysatoren bei Temperaturen von 100 bis 180°C und mittleren Reaktionszeiten von 1 bis 20 Stunden.

2. Wässrige Dispersionen nach Anspruch 1, wobei als Diisocyanate (a) 1-Isocyanato-3,5,5-trimethyl-5-isocyanatomethylcyclohexan (IPDI), Tetramethylxylylendiisocyanat (TMXDI) sowie Bis(-4-isocyanatocyclohexyl)methan (HMDI) verwendet werden.

3. Wässrige Dispersionen nach den Ansprüchen 1 oder 2, wobei es sich bei den Diolen (b₁) um Polyesterdiole handelt.

4. Wässrige Dispersionen nach den Ansprüchen 1 bis 3, wobei als Diole (b₂) unverzweigte Diole mit 2 bis 12 C-Atomen eingesetzt werden.

5. Wässrige Dispersionen nach den Ansprüchen 1 bis 4, wobei als Monomere (c) die 2-Aminoethyl-2-aminoethansulfonsäure sowie deren entsprechende Alkalisalze verwendet werden.

6. Wässrige Dispersionen nach den Ansprüchen 1 bis 5, wobei die Umsetzung der Monomere a₎, b₎, c₎ sowie gegebenenfalls d₎ und e₎ bei Temperaturen von 100 bis 150°C und mittleren Reaktionszeiten von 1,5 bis 10 Stunden erfolgt.

7. Verfahren zur Herstellung von wässrigen Dispersionen für hydrolysefeste Beschichtungen, enthaltend ein Polyurethan, aufgebaut aus
a) Diisocyanaten,
b₎ Diolen, von denen
b₁₎ 10 bis 100 mol-%, bezogen auf die Gesamtmenge der Diole (b), ein Molekulargewicht von 500 bis 5000 aufweisen, und
b₂₎ 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt,
**dadurch gekennzeichnet, daß** die Umsetzung der Monomere a₎, b₎, c₎ sowie gegebenenfalls d₎ und e₎ in Abwesenheit von metallorganischen Katalysatoren bei Temperaturen von 100 bis 180°C und mittleren Reaktionszeiten von 1 bis 20 Stunden erfolgt.

8. Verfahren zur Beschichtung von Gegenständen aus Metall, Kunststoff, Papier, Textil, Leder oder Holz, **dadurch gekennzeichnet, daß** man eine wässerige Dispersion nach den Ansprüchen 1 bis 6 in Form eines Films auf diese Gegenstände aufträgt und die Dispersion trocknet.

9. Verfahren nach Anspruch 8, **dadurch gekennzeichnet, daß** man eine wässerige Dispersion nach den Ansprüchen 1 bis 6 vor dem Auftragen zu einem Schaum aufschlägt und die Dispersion in Form dieses Schlagschaums auf die Gegenstände aufträgt.

10. Verfahren zur Verklebung von Gegenständen aus Metall, Kunststoff, Papier, Textil, Leder oder Holz, **dadurch gekennzeichnet, daß** man eine wässerige Dispersion nach den Ansprüchen 1 bis 6 in Form eines Films auf einem dieser Gegenstände aufträgt und ihn vor oder nach dem Trocknen des Films mit einem anderen Gegenstand zusammenfügt.

11. Verfahren zur Imprägnierung von Gegenständen aus Textil, Leder oder Papier, **dadurch gekennzeichnet, daß** man diese Gegenstände mit der wässerigen Dispersion nach den Ansprüchen 1 bis 6 tränkt und anschließend trocknet.

12. Gegenstände, die mit der wässerigen Dispersion nach den Ansprüchen 1 bis 6 beschichtet, verklebt oder imprägniert sind.

13. Verwendung der wäßrigen Dispersionen gemäß den Ansprüchen 1 bis 6 als hydrolysefeste Beschichtung für Gegenstände aus Metall, Kunststoff, Papier, Textil, Leder oder Holz.
